# EUROPEAN PATENT APPLICATION

(11) **EP 4 819 402 A1**
(43) Date of publication of application: **07.10.2026**
(21) Application number: 25168519.4
(22) Date of filing: 04.04.2025
(51) Int. Cl.: H01R 13/514, H01R 13/518, H01R 13/52, H01R 43/00, B29C 45/16

(54) **MODULAR CONNECTOR WITH INJECTION-MOLDED SEALS**

(71) Applicant: Aptiv Technologies AG, 8200 Schaffhausen (CH)
(72) Inventor: URBANIAK, Andreas, 8200 Schaffhausen (CH); GANESAN, Uvaraj, 8200 Schaffhausen (CH); KUMARESH, Rajan, 8200 Schaffhausen (CH); MOORTHY, Vijay Babu, 8200 Schaffhausen (CH); KÖLLER, Bernhard, 8200 Schaffhausen (CH)
(74) Representative: Bardehle Pagenberg Partnerschaft mbB Patentanwälte Rechtsanwälte

(57) **Abstract**

A modular connector comprises a housing having at least two seats for receiving contact terminal modules; characterized in that the housing comprises a first injection-molded seal, wherein the seal is directly molded onto the connector housing, for sealing the housing against a corresponding counter connector housing; and a second injection-molded seal, wherein the seal is directly molded to the at least two seats, for sealing the housing against an inserted contact terminal module.

## Description

### FIELD OF THE DISCLOSURE

The present disclosure relates to modular connectors and methods for manufacturing them. Specifically, the present disclosure involves connectors with seals for the housing and the module seats, ensuring effective sealing against counter connector housings and inserted contact terminal modules.

### BACKGROUND OF THE INVENTION

In the field of modular connectors, it is common to use separate sealing elements to ensure proper sealing between connector housings and contact terminal modules. Known systems typically involve the use of gaskets, O-rings, or other discrete sealing components that must be assembled into the connector housing. These separate sealing elements are often held in place by retainers, which add complexity to the assembly process and can increase the likelihood of improper installation or seal failure. Additionally, these seals may be prone to displacement or damage during handling and use, compromising the integrity of the connection.

According to known modular connector systems, the sealing process can be cumbersome and time-consuming. The need to insert and secure separate seals into the connector housing can lead to variability in the quality of the seal and potential for human or machine error. Furthermore, the reliance on multiple components for sealing increases the number of parts that must be managed, stored, and assembled, which can complicate inventory management and increase production costs. The use of separate seals also necessitates additional design considerations to accommodate the retainers and ensure that the seals remain in place during operation.

Despite the substantial advances in the field of modular connectors, there remains a need for improved sealing solutions that simplify the assembly process, reduce the risk of seal failure, and enhance the overall reliability of the connection. It is therefore a technical problem underlying the present invention to provide a modular connector system that at least partially overcomes the disadvantages of known systems.

### SUMMARY OF THE DISCLOSURE

It is an object of this invention to provide a modular connector that overcomes one or more of the disadvantages of known systems. This is achieved by a modular connector according to claim 1.

A first aspect of the invention provides a modular connector comprising a housing having at least two seats for receiving contact terminal modules; characterized in that the housing comprises a first injection-molded seal, wherein the seal is directly molded onto the connector housing, for sealing the housing against a corresponding counter connector housing; and a second injection-molded seal, wherein the seal is directly molded to the at least two seats, for sealing the housing against an inserted contact terminal module.

The subject matter described involves a modular connector designed to improve sealing efficiency and reduce the number of parts required for assembly. The modular connector includes a housing that features at least two seats intended for receiving contact terminal modules. The housing is equipped with a first injection-molded seal that is directly molded onto the connector housing itself. This seal serves to seal the housing against a corresponding counter connector housing, ensuring a secure and leak-proof connection between the two housings. Additionally, the housing includes a second injection-molded seal that is directly molded to the seats within the housing. This second seal is designed to seal the housing against the inserted contact terminal modules, providing individual seals for each module and enhancing the overall integrity of the connector.

The term "modular connector" refers to a connector that can accommodate multiple contact terminal modules, allowing for flexibility and customization in its use. "Housing" denotes the main body of the connector that holds the contact terminal modules. "Seats" are the specific locations within the housing where the contact terminal modules are inserted. "Injection-molded seal" refers to a seal that is created by injecting a sealing material, such as silicone, directly onto the housing or seats, forming a permanent and integrated seal.

The advantages of this design include a reduction in the number of parts required for the connector, as the seals are integrated directly into the housing and seats rather than being separate components that need to be assembled. This integration also protects the module seals inside the housing, reducing the risk of damage or misalignment. The design allows for a more compact packaging, as there is no need for additional seal retainers. Furthermore, the injection-molding process ensures that the seals are firmly connected to the housing, eliminating the need to apply pressure to secure the seals and reducing space requirements compared to conventional sealing methods. The distribution system for the sealing material ensures uniform filling of the seal cavities, enhancing the quality and reliability of the seals.

In a first implementation of the modular connector according to the first aspect, the housing comprises channels for distributing the sealing material.

These channels facilitate the effective distribution of the sealing material, ensuring a consistent and reliable seal throughout the housing. This feature enhances the overall integrity and performance of the modular connector by providing a more uniform application of the sealing material, thereby improving its ability to prevent ingress of contaminants and maintain electrical connectivity. The inclusion of channels for distributing the sealing material represents an advancement in the design of modular connectors, contributing to their durability and reliability in various applications.

In a further implementation of the modular connector, the housing seal is made from a different material than the module seal.

This differentiation in material composition brings several advantages, including the potential for optimizing the sealing properties of each seal according to their specific functions and locations within the modular connector. The housing seal, which is directly molded onto the connector housing, is designed to ensure a secure seal against a corresponding counter connector housing, potentially requiring a material with high durability and resistance to environmental factors such as moisture, temperature variations, and mechanical stress. On the other hand, the module seal, directly molded to the seats for the contact terminal modules, might necessitate a material that provides a more flexible and adaptable seal to accommodate the insertion and removal of the contact terminal modules, ensuring a reliable connection while allowing for ease of maintenance and replacement.

In a further implementation of the modular connector, the seals are made from a two-component sealing material, in particular a two-component silicone material.

The implementation introduces the feature that the seals are made from a two-component sealing material, specifically a two-component silicone material. This feature enhances the sealing properties of the connector by utilizing a material known for its durability and flexibility, ensuring a more reliable and robust seal. The use of a two-component silicone material provides improved resistance to environmental factors such as temperature variations and chemical exposure, thereby extending the lifespan and performance of the connector. This material choice also allows for better adhesion to the housing and seats, ensuring that the seals remain securely in place and maintain their integrity over time.

In a further implementation of the modular connector, the connector housing comprises ribs designed to prevent silicone spill during the injection molding process.

These ribs ensure that the silicone used for the seals does not overflow or contaminate other parts of the connector during manufacturing, thereby maintaining the integrity and functionality of the seals and the overall connector. The ribs are preferably aligned with the form and shape of the injected seals, such that the sealing material follows the ribs, respectively such that the ribs form a barrier for the injection sealing material.

In a further implementation of the modular connector, the housing includes overflow openings to allow inspection of the completeness and quality of the sealing material injection.

The overflow openings serve as a mechanism for communication between the internal components of the housing and the external environment, allowing visual or instrumental examination of the seals. The new feature introduced by the overflow openings ensures that the injection-molded seals are properly formed and adhered to the housing and seats, enhancing the reliability and performance of the connector by preventing incomplete or defective seals. This inspection capability is advantageous for maintaining the integrity of the modular connector, ensuring that it provides effective sealing against corresponding counter connector housings and inserted contact terminal modules.

In a further implementation of the modular connector, the housing comprises at least two distribution channels, wherein the at least two channels have varying diameters so that outer sealing cavities are filled with the sealant material at approximately the same time as inner cavities, that are closer to the injection port.

This feature enhances the efficiency and uniformity of the sealing process, ensuring that both inner and outer cavities are adequately sealed simultaneously. The varying diameters of the channels facilitate the even distribution of sealant material, preventing any delay or uneven filling that could compromise the integrity of the seal. This mechanism of communication between the distribution channels and the sealing cavities ensures a reliable and robust seal, improving the overall performance and durability of the modular connector.

In a further implementation of the modular connector, all module seals are created by a single injection process starting from the same injection port.

The implementation introduces a specific mechanism for the creation of module seals within the modular connector. It specifies that all module seals are formed through a single injection process originating from the same injection port. This feature brings efficiency and uniformity to the manufacturing process, ensuring that the seals are consistently produced in one operation rather than multiple separate injections. By using a single injection port, the process reduces complexity and potential points of failure, leading to a more reliable seal and potentially lowering production costs. This method also enhances the structural integrity of the seals, as they are formed simultaneously and thus are more likely to have uniform properties and performance characteristics. The single injection process simplifies the design and assembly of the modular connector, contributing to a streamlined production workflow and potentially reducing the time required for manufacturing.

In a further implementation of the modular connector, the modular connector does not comprise separate sealing elements.

This feature enhances the modular connector's design by eliminating the need for additional components that would otherwise be required for sealing purposes. By stating that the modular connector does not include separate sealing elements, the implementation emphasizes the integration and efficiency of the inventive sealing mechanism. This results in a more streamlined and compact design, reducing the complexity and potential points of failure associated with separate sealing components. The absence of separate sealing elements also suggests a reduction in material usage and parts required, which contributes to environmental benefits and cost savings.

In a further implementation of the modular connector, the module seals are protected inside the housing.

The implementation introduces the feature that the module seals are protected inside the housing, which eliminates the need for a separate seal retainer. This new feature ensures that the seals are safeguarded within the housing structure, thereby enhancing the durability and reliability of the seals by preventing external damage or displacement. Furthermore, the elimination of a separate seal retainer simplifies the design and assembly process of the modular connector, potentially reducing manufacturing costs and improving ease of use.

In a further implementation of the modular connector, the housing has exactly two, four, five, six or eight module seats.

The implementation introduces a specification regarding the number of module seats within the housing of the modular connector. Specifically, the housing is defined to have exactly two, four, five, six, or eight module seats. This feature brings a level of flexibility to the modular connector design, allowing it to accommodate varying configurations based on the specific requirements of the application. This feature also potentially simplifies the manufacturing process by standardizing the housing designs to accommodate these specific seat counts, thereby improving efficiency and reducing costs.

In a further implementation of the modular connector, one contact terminal module is mounted in each module seat of the connector housing.

This arrangement ensures that the modular connector maintains a structured and organized configuration. This feature enhances the modularity of the connector by ensuring that each module is individually supported and isolated within its own seat, thereby reducing the risk of interference or misalignment with adjacent modules. The aspect outlines the presence of injection-molded seals directly molded onto the connector housing and seats, which provides a robust sealing mechanism against a corresponding counter connector housing and inserted contact terminal modules.

A second aspect of the invention provides a modular connector system, comprising two modular connectors according to any one of the implementations, wherein the two modular connectors are corresponding male and female connectors adapted to be mounted to each other.

The advantages of this design include a reduction in the number of parts required for the female connector, protection of module seals inside the housing, and a more compact packaging without the need for a seal retainer.

A third aspect of the invention provides a method for manufacturing a modular connector, comprising: providing a connector housing with at least two module seats; injecting a sealing material directly onto the connector housing, for sealing the housing against a corresponding counter connector housing; injecting a sealing material directly to the at least two seats, for sealing the housing against an inserted contact terminal module and distributing the sealing material through channels in the housing; and allowing the sealing material to cure, thereby forming a molded seal that is directly connected to the housing.

The method for manufacturing a modular connector involves several steps. Initially, a connector housing with at least two module seats is provided. Sealing material is then injected directly onto the connector housing to seal it against a corresponding counter connector housing. Additionally, before, after or simultaneously to the sealing of the housing, sealing material is injected directly into the module seats to seal the housing against inserted contact terminal modules. This sealing material is distributed through channels in the housing. Finally, the sealing material is allowed to cure, forming a molded seal directly connected to the housing.

The implementation uses preferably different injection ports for the sealing material for the housing seal than the module seal. This differentiation in injection ports allows a more controlled and precise application of the sealing material, leading to improved sealing effectiveness and reliability. By utilizing separate injection ports, the method can ensure that the sealing material is appropriately distributed to the intended areas, minimizing the risk of cross-contamination or unintended mixing of materials. The use of distinct injection ports for the housing seal and module seal may also facilitate the accommodation of different sealing materials or formulations tailored to the specific requirements of each sealing area, thereby optimizing the performance and durability of the connector.

### BRIEF DESCRIPTION OF THE DRAWINGS

In the following, various aspects of the disclosed subject matter are described in detail with reference to the accompanying figures, in which:
Figure 1 shows an exploded view of a prior art connector housing assembly.
Figure 2a shows an embodiment of a modular connector with injection ports and channels for distributing sealing material for the module seats.
Figure 2b shows the embodiment of Fig. 2a in a cut view and rotated by 90°.
Figure 3a shows the embodiment of Fig. 1a rotated by 180°, indicating the injection port and channels for distributing sealing material for the housing.
Figure 3b shows the embodiment of Fig. 3a in a cut view and rotated by 90°.
Figure 4 shows the modular connector housing from a bottom view, with multiple seats for receiving contact terminal modules.
Figure 5 shows an embodiment of a female modular connector housing with injection ports and seals.
Figure 6 shows an embodiment of a male modular connector housing, corresponding to the female housing of Fig. 5, with module seats and injection ports for seals.
Figure 7 shows various embodiments of modular connectors with different module seat numbers and injection ports.

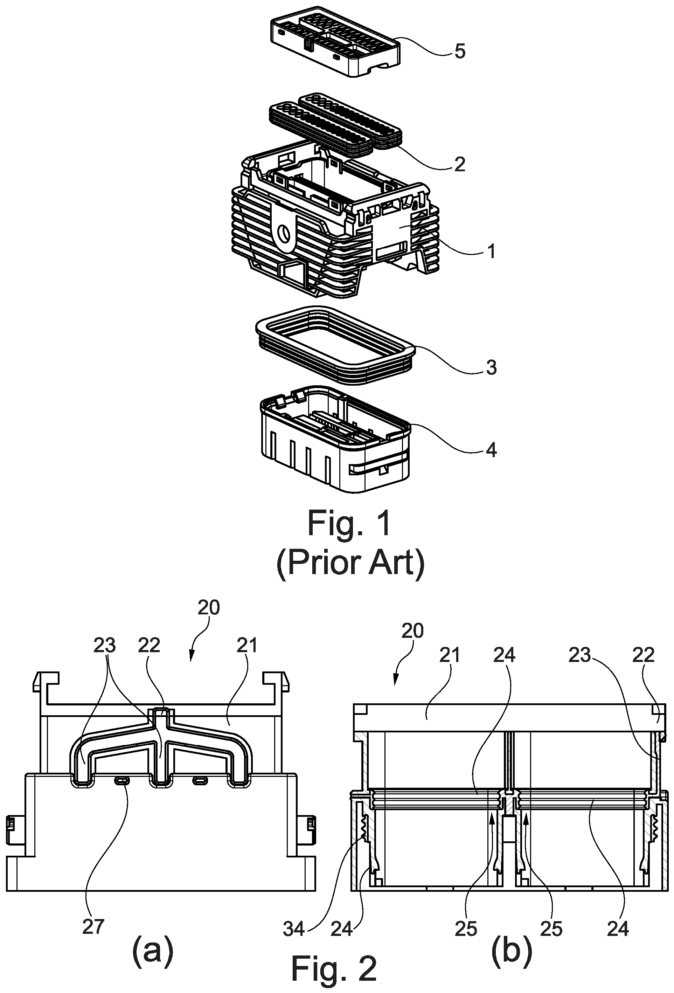

Figure 1 illustrates a prior art connector assembly comprising several components. Housing 1 forms the central structure of the connector, providing the primary enclosure for other elements. Positioned above housing 1 is a matt seal 2, which serves to provide a sealing function, ensuring that the connector remains impermeable to external elements.

Housing seal 3 is located beneath housing 1, acting as an additional sealing layer to enhance the connector's integrity against environmental factors. Housing seal retainer 4 is situated at the bottom of the assembly, designed to secure housing seal 3 in place, preventing displacement or misalignment during operation. Lastly, matt seal retainer 5 is positioned at the top of the assembly, ensuring that matt seal 2 remains firmly attached to housing 1, maintaining its sealing effectiveness. This configuration illustrates the layered approach used in the prior art to achieve robust sealing and structural stability in connector assemblies.

Figure 2 shows a modular connector 20 according to the invention, comprising a housing 21 with various integrated components for sealing and receiving contact terminal modules.

In Figure 2a, the housing 21 is depicted with an injection port 22 for the module seal. The channels 23 distribute the sealing material from the injection port 22 to the designated areas within the housing. An overflow opening 27 is visible, allowing inspection of the completeness and quality of the sealing material injection process. A housing seal 34 is directly molded onto the housing 21, ensuring a secure seal against a corresponding counter connector housing.

Figure 2b illustrates a cross-sectional view of the modular connector 20, highlighting the seats 25 for receiving contact terminal modules. The module seals 24 are directly molded to the seats 25, providing a seal against any inserted contact terminal modules. The channels 23 facilitate the distribution of the sealing material to the seats 25, ensuring consistent sealing throughout the housing.

The injection port 22 is strategically positioned to enable efficient injection of the sealing material into the channels 23. The channels 23 are designed to distribute the sealing material evenly to the module seats 25, ensuring that the module seals 24 are formed uniformly.

The modular connector 20 is designed to accommodate multiple contact terminal modules, with each module seat 25 receiving a module and being sealed by the module seal 24. The housing seal 34 provides an additional layer of sealing, ensuring that the connector housing 21 is securely sealed against a corresponding counter connector housing.

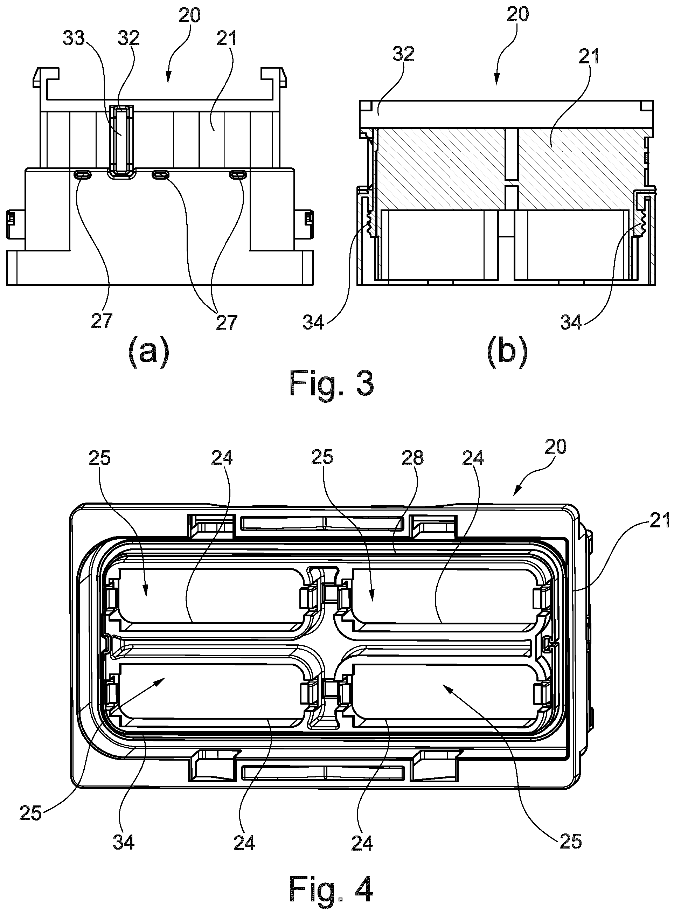

Figure 3a shows the same modular connector 20 from the opposite side as Fig. 2a (i.e., rotate by 180°). The housing 21 comprises an injection port 32 for the housing seal 34. The housing seal 34 is directly molded onto the housing 21, providing a seal against a corresponding counter connector housing. The injection port 32 is connected to channels 33 that distribute the sealing material throughout the housing 21. Overflow openings 27 are included in the housing 21 to allow inspection of the completeness and quality of the sealing material injection.

Figure 3b illustrates a cross-sectional view of the modular connector 20, rotate by 90° in relation to the view of Fig. 3a. In Fig. 3b, the cross-sectional view highlights the internal distribution of the sealing material and the formation of the housing seal 34.

Figure 4 shows the modular connector 20 as seen from the bottom. One can see multiple (four) seats 25 designed to each accommodate a contact terminal module. The housing 21 has a rectangular structure, providing a robust framework for the modular connector 20.

The arrangement of these seats is symmetrical, optimizing the spatial distribution within the housing 21.

A significant feature is the presence of injection-molded seals 24 and 34. Seal 24 is directly molded onto each of the module seats 25, ensuring a tight seal between the housing 21 and any inserted contact terminal module. This seal is advantageous for maintaining the integrity of the connection and preventing any ingress of contaminants or moisture that could compromise the electrical performance of the connector.

Additionally, the housing seal 34 serves the purpose of sealing the housing 21 against a corresponding counter connector housing, thereby ensuring a secure and reliable connection between the modular connector 20 and its counterpart. The housing seal 34 is strategically positioned along the outer edge of the housing 21, providing a continuous barrier that enhances the connector's resistance to environmental factors.

The figure also highlights the presence of ribs 28 within the housing 21. These ribs are designed to prevent silicone spill during the injection molding process, ensuring that the sealing material is precisely distributed and contained within the designated areas. The ribs 28 follow the flow and arrangement of the housing seal 34 and form a barrier for the sealing material.

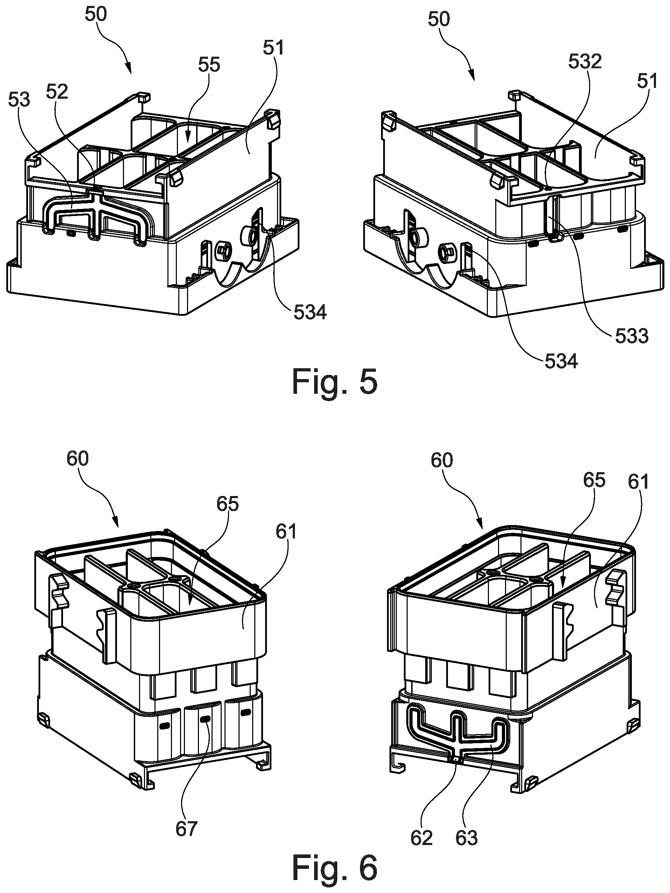

Figure 5 illustrates two views of a modular connector 50 from different perspectives (rotated by 180°), specifically a female modular connector housing 51. The housing 51 is designed to accommodate contact terminal modules within its (six) module seats 55. The housing 51 features an injection port 52 for the module seal and another injection port 532 for the housing seal. The module seal channels 53 are visible, distributing the sealing material from the injection port 52 to the module seats 55. The housing seal channels 533 are also shown, distributing the sealing material from the injection port 532 to the housing seal 534. The housing seal 534 is directly molded onto the connector housing 51, providing a seal against a corresponding counter connector housing. The module seats 55 are designed to receive contact terminal modules, and the module seals are directly molded to these seats to ensure a secure seal against the inserted contact terminal modules. The modular connector 50 does not comprise separate sealing elements, as all seals are directly molded onto the housing 51.

Figure 6 illustrates an embodiment of a modular connector 60, specifically focusing on the male connector housing 61, which is shown from two perspectives (rotated by 180°). The connector housing 61 is the counterpart to the female housing 51, such that both housings together form a modular connector system. The housing 61 likewise comprises six module seats 65, which are designed to accommodate contact terminal modules. In mated condition of male housing 61 and female housing 51, the respective module seats are aligned to allow electrical connection between the contact terminals assigned to the respective modules arranged in the seats 55, 65.

Figure 6, view to the right, highlights the injection port 62, which is a critical component in the manufacturing process of the connector. This port is used for the injection of sealing material for the sealing of the module seats. The sealing process is further supported by distribution channels 63, which are visible in the figure. These channels facilitate the even distribution of the sealing material throughout the housing, ensuring a uniform seal that enhances the connector's reliability and performance.

The connector housing 61 is also equipped with overflow openings 67, which serve a dual purpose. Firstly, these openings allow for the inspection of the completeness and quality of the sealing material injection, providing a visual confirmation that the seal has been properly formed. Secondly, they act as a safety feature, preventing excess sealing material from accumulating within the housing, which could potentially compromise the integrity of the seal.

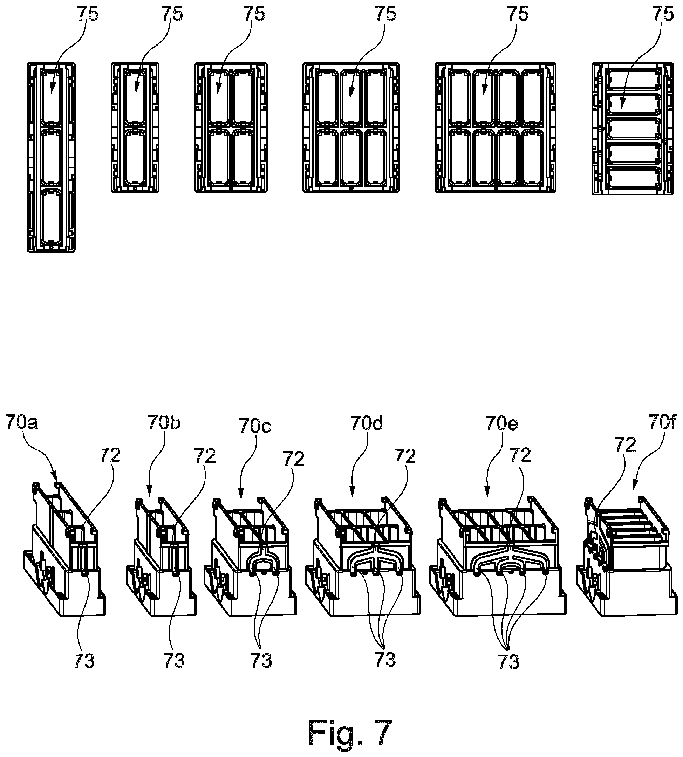

Figure 7 illustrates various embodiments of modular connectors with different configurations of module seats. The figure showcases six distinct modular connectors, each designated by reference numerals 70a, 70b, 70c, 70d, 70e, and 70f. These connectors are differentiated by the number of module seats 75 they possess, which range from two to eight seats.

The top row of the figure displays the top view of the connectors, highlighting the module seats 75. Each connector housing is designed to accommodate a specific number of contact terminal modules. For instance, connector 70a features three module seats 75, while connector 70b has two module seats 75. Connector 70c includes four module seats 75 in a rectangular configuration, connector 70d has six module seats 75, connector 70e comprises eight module seats 75, and connector 70f is equipped with five module seats 75 arranged in a linear fashion.

The bottom row of the figure presents a side view of the connectors, emphasizing the injection ports 72 and the distribution channels 73. The injection ports 72 serve as entry points for the sealing material, which is then distributed through the channels 73 to form the seals around the module seats 75.

Each connector housing is equipped with channels 73 that vary in diameter and length, ensuring that the outer sealing cavities are filled with the sealant material at approximately the same time as the inner cavities, which are closer to the injection port 72.

The modular connectors depicted in Figure 7 are designed to be versatile and adaptable, accommodating different configurations of contact terminal modules. The seals created by the injection molding process are directly molded onto the connector housing and the module seats, providing a robust and reliable sealing solution, independent from the number of module seats incorporated in the respective housing. This eliminates the need for separate sealing elements and seal retainers, simplifying the assembly and maintenance of the connectors.

### Reference sign list:

- 1: prior art connector housing
- 2: matt seal
- 3: housing seal
- 4: housing seal retainer
- 5: matt seal retainer
- 20: modular connector
- 50: female modular connector
- 21, 51, 61: housing
- 22, 52, 62, 72: injection port for module seal
- 23, 53, 63, 73: channels (for module seal)
- 24, 54: module seals
- 25, 55, 65, 75: seats for receiving contact terminal modules
- 26: latching arms
- 27: overflow opening
- 28: rib to stop silicon spill
- 32, 532: injection port for housing seal
- 33, 533: channels (for housing seal)
- 34, 534: housing seal
- 60: male modular connector
- 70a: modular connector with three module seats
- 70b: modular connector with two module seats
- 70c: modular connector with four module seats
- 70d: modular connector with six module seats
- 70e: modular connector with eight module seats
- 70f: modular connector with five module seats

## Claims

1. A modular connector (20; 50; 60; 70) comprising a housing (21; 51; 61) having at least two seats (25; 55; 65; 75) for receiving contact terminal modules; **characterized in that**
the housing comprises a first injection-molded seal (34; 534), wherein the seal is directly molded onto the connector housing (21; 51; 61), for sealing the housing (21; 51; 61) against a corresponding counter connector housing; and
a second injection-molded seal (24; 54), wherein the seal (24; 54) is directly molded to the at least two seats (25; 55; 65; 75), for sealing the housing (21; 51; 61) against an inserted contact terminal module.

2. The modular connector (20; 50; 60; 70) of claim 1, wherein the housing (21; 51; 61) comprises channels (23; 53; 63; 73) for distributing the sealing material.

3. The modular connector (20; 50; 60; 70) of claim 1 or 2, wherein the housing seal is made from a different material than the module seal (24, 54).

4. The modular connector (20; 50; 60; 70) of any one of the preceding claims, wherein the seals (24; 54; 34; 534) are made from a two-component (2K) sealing material, in particular a two-component silicone material.

5. The modular connector (20; 50; 60; 70) of any one of the preceding claims, wherein the connector housing (21; 51; 61) comprises ribs (28) designed to prevent silicone spill during the injection molding process.

6. The modular connector (20; 50; 60; 70) of any one of the preceding claims, wherein the housing (21; 51; 61) includes overflow openings (27) to allow inspection of the completeness and quality of the sealing material injection.

7. The modular connector (20; 50; 60; 70) of any one of the preceding claims, wherein the housing (21; 51; 61) comprises at least two distribution channels (23; 53; 63; 73), wherein the at least two channels have varying diameters so that outer sealing cavities are filled with the sealant material at approximately the same time as inner cavities, that are closer to the injection port (22; 52; 62; 72; 32; 532).

8. The modular connector (20; 50; 60; 70) of any one of the preceding claims, wherein all module seals (24; 54) are created by a single injection process starting from the same injection port (22; 52; 62; 72).

9. The modular connector (20; 50; 60; 70) of any one of the preceding claims, wherein the modular connector (20; 50; 60; 70) does not comprise separate sealing elements.

10. The modular connector (20; 50; 60; 70) of any one of the preceding claims, wherein the module seals (24, 54) are protected inside the housing (21; 51; 61), eliminating the need for a separate seal retainer.

11. The modular connector (20; 50; 60; 70) of any one of the preceding claims, wherein the housing has exactly two, four, five, six or eight module seats (25; 55; 65; 75).

12. The modular connector (20; 50; 60; 70) of any one of the preceding claims, wherein one contact terminal module is mounted in each module seat (25; 55; 65; 75) of the connector housing (21; 51; 61).

13. A modular connector system, comprising two modular connectors (50; 60) according to any one of claims 1 to 10, wherein the two modular connectors are corresponding male (60) and female (50) connectors adapted to be mounted to each other.

14. A method for manufacturing a modular connector (20), comprising:
providing a connector housing (21; 51; 61) with at least two module seats (25; 55; 65; 75);
injecting a sealing material directly onto the connector housing (21; 51; 61), for sealing the housing against a corresponding counter connector housing;
injecting a sealing material directly to the at least two seats (25; 55; 65; 75), for sealing the housing (21; 51; 61) against an inserted contact terminal module and distributing the sealing material through channels (23; 53; 63; 73) in the housing (21; 51; 61);
allowing the sealing material to cure, thereby forming a molded seal that is directly connected to the housing.

15. The method of claim 14, wherein the sealing material for the housing seal (34; 534) is injected at a different injection port than the module seal (24, 54).
